# FASCICULE DE BREVET EUROPEEN

(11) **EP 3 426 384 B1**
(45) Date de publication et mention de la délivrance du brevet: **09.06.2021**
(21) Numéro de dépôt: 17712200.9
(22) Date de dépôt: 27.02.2017
(51) Int. Cl.: B01D 71/80, B01D 67/00, B01D 69/14, B01D 71/34, C08J 5/18, C08L 53/00, C08L 27/16

(54) **FILMS POREUX OBTENUS A PARTIR DE LATEX DE POLYMERES**
PORÖSE FILME AUS POLYMERLATEX
POROUS FILMS OBTAINED FROM POLYMER LATEX

(30) Priorité: 08.03.2016 FR 1651911
(43) Date de publication de la demande: 16.01.2019
(73) Titulaire: Arkema France, 92700 Colombes (FR); Centre National de la Recherche Scientifique, 75016 Paris (FR); Université de Montpellier, 34090 Montpellier (FR); Ecole Nationale Supérieure de Chimie de Montpellier, 34296 Montpellier (FR)
(72) Inventeur: BEAUME, François, 69230 SAINT GENIS LAVAL (FR); DERATANI, André, 34170 CASTELNAU LE LEZ (FR); QUEMENER, Damien, 34830 Jacou (FR); SEMSARILAR, Mona, 34080 MONTPELLIER (FR)
(74) Mandataire: Arkema Patent
(86) Numéro de dépôt international: PCT/FR2017/050431
(87) Numéro de publication internationale: WO 2017/153663

(56) Documents cités:
- WO-A1-94/15997
- WO-A1-2014/139977
- FR-A1- 2 937 644
- US-A1- 2007 141 340

## Description

### DOMAINE DE L'INVENTION

La présente invention concerne un matériau poreux préparé à partir d'un latex de polymères, ainsi que des films et autres articles formés avec ce matériau, et un procédé de fabrication dudit matériau.

### ARRIERE-PLAN TECHNIQUE

Une organisation à l'échelle nanométrique de la couche active des membranes de filtration est de plus en plus recherchée afin de mieux contrôler leur sélectivité tout en maintenant une grande perméabilité.

Le polyfluorure de vinylidène (PVDF) est un polymère de choix pour la fabrication de telles membranes, en raison notamment de sa bonne tenue mécanique et de sa résistance aux attaques chimiques.

Le PVDF étant hydrophobe, il offre une résistance élevée à l'eau. C'est pourquoi le document WO 2010/051150 décrit des membranes polymères constituées par une matrice polymère à base de PVDF, mélangée à un copolymère à blocs amphiphile, afin d'augmenter le caractère hydrophile de la matrice. Dans ce document, le PVDF est intimement mélangé avec le copolymère à blocs.

Le document WO 2014/139977 décrit une version améliorée de cette technologie, dans laquelle sont utilisés des copolymères à blocs particuliers, comprenant un premier bloc hydrophile susceptible d'être obtenu à partir de monomères d'acrylate de n-butyle et de méthacrylate d'hydroxyéthyle, et un deuxième bloc hydrophobe de type polyméthacrylate de méthyle.

Il existe encore un besoin de fournir un matériau permettant de fabriquer des membranes présentant une taille de pores précise et uniforme ; le cas échéant avec une fonctionnalisation de surface souhaitée. Il existe également un besoin de réduire la quantité de solvants consommée lors de la fabrication d'un tel matériau. Il existe également un besoin de pouvoir appliquer un tel matériau sur des supports divers.

### RESUME DE L'INVENTION

L'invention concerne en premier lieu un matériau poreux comprenant des particules de polymère P assemblées par un copolymère à blocs, le copolymère à blocs comprenant au moins un bloc constitué par une séquence polymère immiscible avec le polymère P, et au moins deux blocs constitués par des séquences polymères miscibles avec le polymère P, tel que défini dans la revendication 1.

Selon un mode de réalisation, le diamètre Dv50 des particules de polymère P vaut de 30 à 1000 nm, de préférence de 50 à 400 nm et de manière plus particulièrement préférée de 100 à 200 nm.

Selon un mode de réalisation, le bloc A est un bloc de polyméthacrylate de méthyle et le bloc B est un bloc de polyméthacrylate de 2-(diméthylamino)éthyle.

Selon un mode de réalisation, le polymère P est un homopolymère ou copolymère formé à partir de fluorure de vinylidène ; et de manière plus particulièrement préférée, le polymère P est un homopolymère de polyfluorure de vinylidène.

Selon un mode de réalisation, le matériau présente :
- une teneur massique en copolymère à blocs allant de 1 à 60 %, de préférence de 10 à 50 %, de manière plus particulièrement préférée de 30 à 50 % ; et/ou
- une teneur massique en polymère P allant de 40 à 99 %, de préférence de 50 à 90 %, de manière plus particulièrement préférée de 50 à 70 %.

Selon un mode de réalisation, le copolymère à blocs comprend :
- une teneur massique en blocs constitués par des séquences polymères miscibles avec le polymère P allant de de 10 à 90 %, de préférence de 40 à 80 %, de manière plus particulièrement préférée de 60 à 75 % ; et/ou
- une teneur massique en blocs constitués par des séquences polymères immiscibles avec le polymère P allant de de 10 à 90 %, de préférence de 20 à 60 %, de manière plus particulièrement préférée de 25 à 40 %.

L'invention concerne également un film comprenant au moins une couche du matériau ci-dessus.

Selon un mode de réalisation, le film est une membrane, de préférence une membrane de filtration.

Selon un mode de réalisation, le film constitue un revêtement déposé sur un substrat, le substrat étant de préférence une membrane de filtration ou un support tissé ou non-tissé.

L'invention concerne également des procédés de fabrication du matériau ci-dessus, ou du film ci-dessus.

Selon un premier mode de réalisation, ledit procédé de fabrication comprend les étapes suivantes:
- la fourniture d'une suspension de particules de polymère P (latex de particules);
- la fourniture du copolymère à blocs ;
- le mélange de la suspension de particules de polymère P et du copolymère à blocs, en présence d'un solvant ;
- le séchage de ce mélange.

Dans ce premier cas, le latex de particules de polymère P est préexistant.

Selon un deuxième mode de réalisation, ledit procédé de fabrication du matériau selon l'invention comprend les étapes suivantes:
- la fourniture d'une solution de polymère P ;
- la fourniture d'un copolymère à blocs ;
- la précipitation du mélange d'une solution de polymère P et du copolymère à blocs dans l'eau, en présence d'un solvant, conduisant à l'obtention d'un latex;
- le séchage de ce latex.

Dans ce deuxième cas, on fabrique le latex *in situ* au moyen de la précipitation du mélange de polymère P et de copolymère à blocs en solution, dans un solvant.

Selon un mode de réalisation, le copolymère à blocs est fourni en solution dans le solvant.

Le solvant utilisé pour mettre en suspension le mélange (polymère P + copolymère à blocs) (selon le premier mode de réalisation décrit), ou de précipiter le mélange (polymère P + copolymère à blocs) (selon le deuxième mode de réalisation décrit) doit être capable de :
- dissoudre le copolymère à blocs,
- pour le premier cas, de produire le gonflement du polymère P et/ou sa dissolution, et
- pour le deuxième cas, de dissoudre le polymère P.

Selon un mode de réalisation, ledit solvant est choisi parmi les éthers, les cétones, les solvants aromatiques, les alcools ou les esters, et de préférence est choisi parmi l'acétone et le tétrahydrofurane.

Des exemples de solvant apte à produire le gonflement du polymère P et/ou sa dissolution, convenant au premier mode de réalisation, sont : l'acétone, le tétrahydrofurane (THF), le N,N-diméthylformamide (DMF).

L'acétone et le DMF conviennent particulièrement bien comme solvants pour la précipitation du mélange de polymère P avec le copolymère à blocs, nécessaire pour le deuxième mode de réalisation.

Selon un mode de réalisation, le procédé comprend l'étalement du mélange sur une surface avant l'étape de séchage.

La présente invention permet de répondre aux besoins exprimés ci-dessus. Elle fournit plus particulièrement un matériau permettant de fabriquer des membranes présentant une taille de pores précise et uniforme ; le cas échéant avec une fonctionnalisation de surface souhaitée. Avantageusement, la quantité de solvants consommée lors de la fabrication d'un tel matériau est réduite par rapport à l'état de la technique. Le matériau selon l'invention peut être déposé sur des supports divers.

Ces différents avantages sont obtenus en assemblant entre elles des particules de polymère (telles que des particules de PVDF) issues d'un latex pour former un réseau de particules. La stabilisation et la cohésion des particules sont obtenues en les reliant par un copolymère à blocs. Ainsi, on peut préparer des couches actives stables mécaniquement et chimiquement, et présentant une taille et une distribution de pores souhaitées. De telles couches présentent des propriétés de perméabilité à l'eau et de sélectivité propres à leur utilisation notamment pour des applications de filtration.

### DESCRIPTION DE MODES DE REALISATION DE L'INVENTION

L'invention est maintenant décrite plus en détail et de façon non limitative dans la description qui suit.

Le matériau de l'invention peut être préparé en mélangeant un latex d'un polymère P avec un copolymère à blocs.

Par « *latex* » on entend une suspension de particules de polymère dans un non-solvant. De manière particulièrement préférée le polymère P est un polyfluorure de vinylidène (PVDF). Le PVDF homopolymère est préféré et peut être obtenu par exemple selon le procédé décrit dans le document WO2005/121290. Toutefois, on peut également utiliser un copolymère dérivé du PVDF. De tels copolymères sont obtenus par copolymérisation de fluorure de vinylidène (VDF) avec au moins un autre comonomère qui est avantageusement choisi parmi le chlorotrifluoroéthylène (CTFE), l'hexafluoropropylène (HFP), le trifluoroéthylène (TrFE), le tétrafluoroéthylène (TFE) et l'éthylène. Plusieurs comonomères peuvent éventuellement être utilisés. Avantageusement, ledit copolymère contient au moins 75 % en poids de motifs issus du comonomère VDF, de préférence au moins 80 %, voire au moins 85 %.

Dans un mode de réalisation préféré, un seul polymère P est présent dans les particules. Toutefois, il est également possible de prévoir que les particules soient formées d'un mélange de polymères. Dans ce cas, les références dans la présente demande au polymère P se comprennent comme une référence au mélange de polymères. Pour chacun de ces cas, il est possible d'utiliser des mélanges ayant des tailles de particules identiques ou différentes. Ainsi avec un mélange comportant des tailles de particules différentes, on peut obtenir un assemblage plus compact des billes de polymère dans le film ou membrane final (les billes les plus petites venant se loger dans les interstices entres les billes plus grandes).

Le non-solvant du latex est de préférence de l'eau.

La distribution de taille des particules de la suspension de latex est de préférence caractérisée par un diamètre Dv50 qui vaut de 30 nm à 1 µm, de préférence de 50 à 400 nm et de manière plus particulièrement préférée de 100 à 200 nm.

Le terme Dv50 désigne le 50^{ème} centile de la distribution de taille des particules, c'est-à-dire que 50 % des particules ont une taille inférieure au Dv50 et 50 % ont une taille supérieure au Dv50. Il s'agit de la médiane de la distribution volumétrique des particules. Le Dv50 des particules de latex peut être estimé par analyse de diffusion quasi-élastique de la lumière.

La taille des particules peut être choisie en fonction de la porosité qui est souhaitée pour le matériau de l'invention.

Les latex peuvent être obtenus selon le document WO2005/121290, ou préparés par précipitation d'un mélange de polymère P et du copolymère à blocs.

Le copolymère à blocs comporte au moins un bloc constitué par une séquence polymère immiscible avec le polymère P, et au moins deux blocs constitués par des séquences polymères miscibles avec le polymère P.

Par séquence polymère miscible avec le polymère P, on entend une séquence polymère susceptible de se mélanger de manière homogène avec le polymère, après dissolution dans un solvant approprié et séchage. Une séquence polymère immiscible avec le polymère P est une séquence polymère qui n'est pas miscible avec le polymère P, c'est-à-dire dont tout mélange avec le polymère P est nécessairement biphasique.

Une méthode possible pour déterminer le caractère homogène ou non d'un mélange de deux polymères (et donc pour déterminer la miscibilité ou l'immiscibilité de deux polymères) consiste à effectuer une mesure de température de transition vitreuse sur le mélange, par exemple par calorimétrie différentielle à balayage (DSC) selon la norme ASTM E1356. Si une seule température de transition vitreuse est obtenue, le mélange analysé est homogène, et les polymères sont miscibles. Si deux températures de transition vitreuse sont obtenues, le mélange analysé est hétérogène, et les polymères sont immiscibles.

Le bloc A est une séquence polymère qui peut être homopolymère ou copolymère. Le bloc A peut par exemple être un bloc constitué de la même ou des mêmes unités de répétition que le polymère P.

Le bloc A peut être une séquence de polyester méthacrylique ou de polyester acrylique.

Dans un mode de réalisation préféré, le bloc A est un bloc de polyméthacrylate de méthyle (PMMA).

De préférence, la masse molaire moyenne en nombre du bloc A est de 1000 à 50000 g/mol, et de manière plus particulièrement préférée de 3000 à 20000 g/mol. Une masse molaire trop faible pourrait limiter l'enchevêtrement solide du bloc A avec le polymère P, tandis qu'une masse molaire trop élevée pourrait limiter la mobilité du bloc.

Le bloc B est une séquence polymère qui peut être homopolymère ou copolymère. Le bloc B peut par exemple être choisi parmi les polymères acryliques ou méthacryliques.

Dans un mode de réalisation préféré, le bloc B est un bloc de polyméthacrylate de 2-(diméthylamino)éthyle (PDMAEMA).

De préférence, la masse molaire moyenne en nombre du bloc B est de 1000 à 50000 g/mol, et de manière plus particulièrement préférée de 3000 à 20000 g/mol.

Dans un mode de réalisation, le bloc B est hydrophile. Cette caractéristique est particulièrement avantageuse pour les applications de filtration d'eau ou de solutions aqueuses.

Dans un mode de réalisation alternatif, le bloc B est hydrophobe. Cette caractéristique est particulièrement avantageuse pour la fabrication de matériaux superhydrophobes.

Le bloc B peut également être fonctionnalisé selon l'application recherchée pour le matériau de l'invention, par exemple pour la capture de métaux grâce à la présence de groupements chélatants et/ou complexants.

Selon un mode de réalisation, la teneur massique en blocs A dans le copolymère à blocs est de 10 à 90 %, de préférence de 40 à 80 %, de manière plus particulièrement préférée de 60 à 75 %

Selon un mode de réalisation, la teneur massique en blocs B dans le copolymère à blocs est de 10 à 90 %, de préférence de 20 à 60 %, de manière plus particulièrement préférée de 25 à 40 %.

Le copolymère à blocs est mélangé avec le latex de polymère P en présence d'un solvant. Le solvant doit être approprié pour dissoudre au moins partiellement le polymère P (ainsi que les blocs du copolymère à blocs qui sont miscibles avec celui-ci).

Le choix du solvant dépend donc de la nature du polymère P.

Le solvant peut notamment être choisi parmi les éthers, les cétones, les solvants aromatiques, les alcools ou les esters.

Lorsque le polymère P est du PVDF, l'acétone et le tétrahydrofurane (THF) sont des solvants particulièrement préférés.

Le copolymère à blocs peut être avantageusement mis en solution dans le solvant, et cette solution être mélangée avec le latex de polymère P. Alternativement, le latex de polymère P peut être combiné avec le solvant, puis le copolymère à blocs être dissout dans ce mélange.

Selon un autre mode de réalisation, le latex peut être préparé directement à partir du mélange de polymère P et de copolymère à blocs en solution dans un solvant polaire aprotique tel que le N,N-diméthylformamide (DMF). Ce mélange est précipité sous agitation avec un homogénéisateur à ultrasons de manière à obtenir une dispersion de particules avec une distribution de taille telle qu'indiquée précédemment.

Selon des modes de réalisation particuliers, le matériau comporte des teneurs massiques respectives en copolymère à blocs d'une part et en polymère P d'autre part : de 1 à 10 % et de 90 à 99 % ; ou de 10 à 20 % et de 80 à 90 % ; ou de 20 à 30 % et de 70 à 80 % ; ou de 30 à 40 % et de 60 à 70 % ; ou de 40 à 50 % et de 50 à 60 % ; ou de 50 à 60 % et de 40 à 50 % ; ou de 60 à 70 % et de 30 à 40 % ; ou de 70 à 80 % et de 20 à 30 % ; ou de 80 à 90 % et de 10 à 20 %.

Après le mélange des composants, le solvant (ainsi que le non-solvant du latex) sont évaporés. On obtient ainsi le matériau poreux selon l'invention, constitué des particules de polymère P assemblées par le copolymère à blocs. Les pores du matériau sont les interstices laissés après l'évaporation du solvant entre les particules de polymère P, qui sont reliées entre elles par le copolymère à blocs. Cette structure granulaire peut être identifiée notamment par microscopie électronique à balayage ou par microscopie à force atomique. On observe dans ces conditions une variété de morphologies comme : l'empilement de sphères, des assemblages de particules sphériques discrètes ou coalescées, ou des structures alvéolaires organisées en pseudo nid d'abeille sur une structure à macrovides.

La distribution de taille des particules de polymère P dans le matériau, estimable par les techniques de microscopie ci-dessus, est de préférence caractérisée par un Dv50 ayant les mêmes valeurs que celles énoncées ci-dessus en rapport avec le latex.

Le matériau selon l'invention peut notamment être mis sous forme de film.

Pour cela, il est possible d'appliquer le mélange de particules de polymère P et de copolymères à blocs en solution sur un substrat et d'évaporer le solvant et le non-solvant.

Le film peut ensuite être détaché du substrat. Il peut ainsi notamment être utilisé comme une membrane (par exemple de filtration) en tant que tel. Par exemple, si le substrat est hydrophile, tel qu'une plaque de verre, il est possible d'immerger le film déposé et le substrat dans une solution aqueuse, afin de faciliter le détachement du film du substrat.

Alternativement, si l'on cherche à fabriquer une couche granulaire sur un support, on peut directement former le film sur ledit support. Cette méthode est par exemple utile pour former une couche de matériau de l'invention sur une membrane de filtration (notamment une membrane de microfiltration ou d'ultrafiltration). Les matériaux tissés et non-tissés peuvent également être utilisés comme supports.

Le matériau de l'invention peut également être utilisé comme couche lubrifiante, couche autonettoyante, couche anti-salissante, couche antibrouillard sur divers supports, ou encore comme couche améliorant l'adhésion d'un revêtement pour les peintures et autres traitements de surface.

Selon un mode de réalisation préféré, la porosité moyenne du matériau (telle que déterminée par microscopie électronique à balayage) est de 1 à 100 nm, de préférence de 5 à 50 nm.

### EXEMPLES

Les exemples suivants illustrent l'invention sans la limiter.

### Exemple 1 - synthèse d'un copolymère à blocs

Dans cet exemple, on prépare un copolymère tribloc comportant des blocs terminaux de PMMA et un bloc central de PDMAEMA.

La polymérisation RAFT (polymérisation radicalaire contrôlée par transfert de chaîne réversible par addition-fragmentation) est utilisée pour préparer ce copolymère tribloc.

Dans un premier temps, un agent RAFT di-fonctionnel est synthétisé en deux étapes selon le schéma réactionnel ci-dessous :

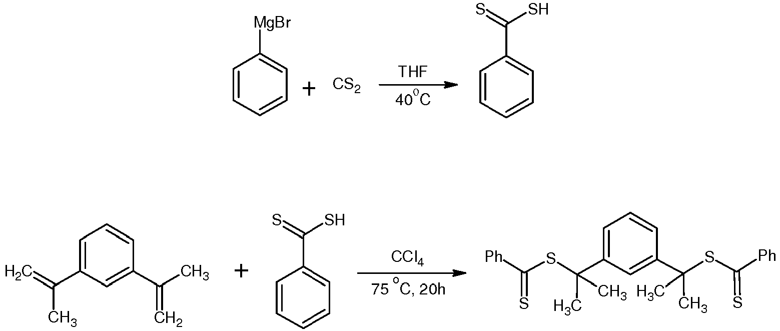

Une fois purifié et caractérisé, l'agent RAFT di-fonctionnel est utilisé dans la polymérisation du bloc central hydrophile (à partir du monomère DMAEMA) dans un premier temps, suivie de la polymérisation des blocs terminaux PMMA. Le schéma de préparation de ce copolymère à blocs PMMA-b-PDMAEMA-b-PMMA est représenté ci-dessous :

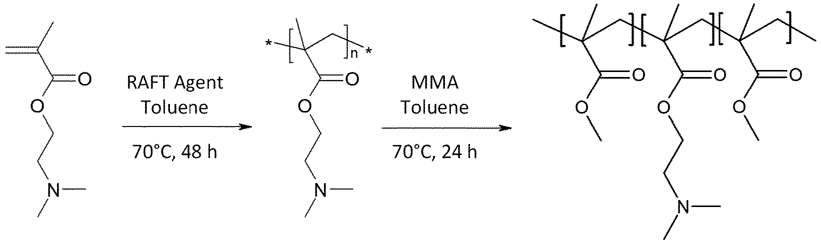

Le copolymère tribloc, après précipitation dans l'hexane, est caractérisé par chromatographie d'exclusion stérique dans le tétrahydrofurane (détermination des masses molaires en nombre Mₙ, en masse M_{w} et de l'indice de polydispersité PDI). Le degré de polymérisation DP est calculé d'après l'analyse des groupes terminaux par RMN du proton. Les résultats obtenus sont rassemblés dans le tableau I ci-dessous :

**Tableau I**

| | Mₙ (g/mol) | M_{w} (g/mol) | PDI | DP |
|---|---|---|---|---|
| PDMAEMA | 14800 | 19600 | 1,32 | 93 (DMAEMA) |
| PMMA-b-PDMAEMA-b-PMMA | 23500 | 31900 | 1,35 | 100 (MMA) |

### Exemple 2 - fabrication de membranes à partir de latex préparé selon le document WO2005/121290

Une suspension de particules de PVDF (latex) présente une taille moyenne des particules de latex de 150 nm, par détermination en solution par diffusion quasi-élastique de la lumière. Ce latex comporte 28 % en masse de PVDF.

0,5 g de latex de PVDF à 28 % en masse est mélangé directement avec 1,4 g d'une solution de copolymère tribloc de l'exemple 1 dans un solvant (10 % en masse).

Le solvant utilisé est soit l'acétone, soit le THF, soit le DMF.

Après 24 h d'agitation dans un conteneur fermé hermétiquement, une quantité d'eau est ajoutée sous sonication afin d'ajuster la concentration finale de la solution. L'acétone est ensuite évaporée entièrement sous simple agitation magnétique de sorte à ancrer solidement le copolymère aux particules.

Les particules obtenues sont analysées par diffusion quasi-élastique de la lumière avant la fabrication de la membrane. On observe un doublement de la taille des particules de latex du fait du gonflement en présence du solvant.

Le mélange est ensuite étalé sur une plaque de verre et immergé dans l'eau. On obtient une couche de quelques microns d'épaisseur.

Trois concentrations différentes de latex (4, 5 et 7,7 % en masse) sont testées pour la préparation des membranes. La concentration en question correspond au taux de solides (polymère et copolymère tribloc) dans la solution étalée (eau, après évaporation d'un volume correspondant à la fraction d'acétone ou autre solvant).

Les membranes obtenues sont analysées par microscopie électronique à balayage et microscopie à force atomique (AFM). On observe un retour à la taille originelle des particules du latex (environ 150 nm) après lavage des membranes et séchage. D'autre part, l'image AFM montre que les membranes préparées ont une surface peu rugueuse (la différence entre le point haut et le point bas est égale à environ une demi-hauteur de particules) et un arrangement compact.

Les membranes obtenues en faisant varier la concentration ont le même profil par observation au microscope électronique à balayage mais des propriétés mécaniques différentes. L'augmentation de la concentration de latex de 4 à 7,7 % conduit à une amélioration apparente des propriétés mécaniques, en particulier la résistance à l'étirement et la résistance à la compression, mesurées par analyse en rhéologie et par analyse mécanique dynamique des matériaux.

### Exemple 3 - fabrication d'un latex de particules de PVDF stabilisées par un copolymère à blocs, préparé par précipitation

Une suspension de particules de PVDF est réalisée à partir de solutions diluées (1 et 2 % en masse) de Kynar 761 ou 720E dans le DMF (Solution A). Une solution B consistant en une solution diluée (1 % en masse) de copolymère à blocs de l'exemple 1 dans le même solvant est ensuite mélangée à la solution A dans une proportion de 1 volume pour 1 volume. Le mélange (Solution C) est laissé sous agitation à 70°C durant environ 15 h puis précipité sous la forme de fines particules à l'aide d'un homogénéisateur à ultrasons porté à sa puissance maximale, dans un bain d'eau à pH 3 contenant des quantités variables d'acétone de 12,5 à 50 % en volume (Solution D). Une suspension stable est obtenue après échange du mélange acétone / eau avec de l'eau pure. Les valeurs de taille des particules de PVDF analysée par diffusion quasi-élastique de la lumière sont indiquées dans le tableau II ci-dessous.

**Tableau II**

| Suspension | Grade de PVDF | [PVDF] (Solution A) (% en masse) | [Acétone] (Solution D) (% en volume) | Taille des particules (nm) |
|---|---|---|---|---|
| 1 | 761 | 1 | 37,5 | 375 |
| 2 | 761 | 2 | 37,5 | 222 |
| 3 | 761 | 1 | 12,5 | 563 |
| 4 | 720E | 2 | 12,5 | 417 |

### Exemple 4 - fabrication de membranes à partir de latex préparé selon l'exemple 3

Le latex préparé selon l'exemple 3 est étalé sur une plaque de verre et la même procédure que celle présentée dans l'exemple 2 est appliquée à partir de cette étape. Les membranes obtenues sont observées au microscope électronique à balayage pour examiner leur aspect de surface et leur tranche.

On observe une diminution de la taille des particules après séchage comme dans le cas de l'exemple 2. Une variété de morphologies peut être obtenue comme l'empilement de sphères, des chapelets de sphères coalescées et une surface alvéolaire organisée en pseudo nid d'abeille sur une structure à macrovides.

### Exemple 5 - tests de filtration

Des tests préliminaires de filtration d'eau pure ont été réalisés avec la membrane de l'exemple 2 préparée à partir d'une solution à 7,7 % en masse de latex, avec l'acétone en tant que solvant. La membrane de 25 mm de diamètre et de 25 µm d'épaisseur, supportée sur un non-tissé de polyester, est placée dans un module de filtration frontale d'un volume de 10 mL.

La membrane est conditionnée sous une pression de 0,2 bar pendant 1 heure. Après cette étape de conditionnement, la pression est augmentée par incrément de 0,5 bar jusqu'à 5 bar. Pour chaque pression, on note le débit qui est exprimé en L/h.m².

La courbe de débit à l'eau en fonction de la pression appliquée montre une rupture de pente vers 3 bar. Au-delà de cette valeur, on observe que le flux augmente beaucoup plus rapidement qu'en dessous.

La variation de la perméabilité hydraulique (en L/h.m².bar) montre que ce paramètre diminue jusqu'à environ 2 bar puis augmente au-dessus de 3 bar, avec un domaine transitoire entre 2 et 3 bar. Il s'agit généralement d'un paramètre intrinsèque d'un matériau, c'est-à-dire qu'il ne varie quasiment pas avec la pression et est caractéristique de la taille des pores et de la porosité.

Sans vouloir être liés par une quelconque théorie, les inventeurs estiment que cette variation peut être interprétée comme une variation du diamètre des pores et de la porosité du matériau sous la pression appliquée. La première partie de la courbe correspondrait à un écrasement du matériau avec une diminution correspondante du diamètre de pores. Au-delà d'une pression critique, un réarrangement des particules interviendrait qui augmenterait la porosité et le diamètre des pores.

Ainsi, il est possible d'ajuster la porosité de la membrane en fonction de la pression appliquée.

## Revendications

1. Matériau poreux comprenant des particules de polymère P assemblées par un copolymère à blocs, le copolymère à blocs comprenant au moins un bloc constitué par une séquence polymère immiscible avec le polymère P, et au moins deux blocs constitués par des séquences polymères miscibles avec le polymère P, dans lequel :
- le copolymère à blocs est un copolymère tribloc de formule générale ABA, dans laquelle A représente un bloc constitué par une séquence polymère miscible avec le polymère P, et B représente un bloc constitué par une séquence polymère immiscible avec le polymère P ;
- le bloc A et le bloc B sont des séquences homopolymères ou copolymères acryliques ou méthacryliques ;
- le polymère P est choisi parmi le polyfluorure de vinylidène et les polychlorures de vinyle.

2. Matériau selon la revendication 1, dans lequel le diamètre Dv50 des particules de polymère P vaut de 30 à 1000 nm, de préférence de 50 à 400 nm et de manière plus particulièrement préférée de 100 à 200 nm.

3. Matériau selon l'une des revendications 1 ou 2, dans lequel le bloc A est une séquence homopolymère ou copolymère, choisie parmi les polyesters méthacryliques, et les polyesters acryliques;

4. Matériau selon la revendication 1 à 3, dans lequel le bloc A est un bloc de polyméthacrylate de méthyle et le bloc B est un bloc de polyméthacrylate de 2-(diméthylamino)éthyle.

5. Matériau selon l'une des revendications 1 à 4, dans lequel le polymère P est un homopolymère ou copolymère formé à partir de fluorure de vinylidène, de préférence un homopolymère de polyfluorure de vinylidène.

6. Matériau selon l'une des revendications 1 à 5, présentant :
- une teneur massique en copolymère à blocs allant de 1 à 60 %, de préférence de 10 à 50 %, de manière plus particulièrement préférée de 30 à 50 % ; et/ou
- une teneur massique en polymère P allant de 40 à 99 %, de préférence de 50 à 90 %, de manière plus particulièrement préférée de 50 à 70 %.

7. Matériau selon l'une des revendications 1 à 6, dans lequel le copolymère à blocs comprend :
- une teneur massique en blocs constitués par des séquences polymères miscibles avec le polymère P allant de de 10 à 90 %, de préférence de 40 à 80 %, de manière plus particulièrement préférée de 60 à 75 % ; et/ou
- une teneur massique en blocs constitués par des séquences polymères immiscibles avec le polymère P allant de de 10 à 90 %, de préférence de 20 à 60 %, de manière plus particulièrement préférée de 25 à 40 %.

8. Film comprenant au moins une couche de matériau selon l'une des revendications 1 à 7.

9. Film selon la revendication 8, qui est une membrane, de préférence une membrane de filtration.

10. Film selon la revendication 8 ou 9, qui constitue un revêtement déposé sur un substrat, le substrat étant de préférence une membrane de filtration ou un support tissé ou non-tissé.

11. Procédé de fabrication d'un matériau selon l'une des revendications 1 à 7, ou d'un film selon l'une des revendications 8 à 10, comprenant :
- la fourniture d'une suspension de particules de polymère P ;
- la fourniture du copolymère à blocs ;
- le mélange de la suspension de particules et du copolymère à blocs, en présence d'un solvant ;
- le séchage de ce mélange.

12. Procédé selon la revendication 11, dans lequel le copolymère à blocs est fourni en solution dans le solvant.

13. Procédé de fabrication d'un matériau poreux selon l'une des revendications 1 à 7, ou d'un film selon l'une des revendications 8 à 10, comprenant :
- la fourniture d'une solution de polymère P ;
- la fourniture du copolymère à blocs ;
- la précipitation du mélange de polymère P et de copolymère à blocs dans l'eau en présence d'un solvant, conduisant à l'obtention d'un latex ;
- l'évaporation du solvant et du non-solvant de ce latex pour obtenir ledit matériau poreux.

14. Procédé selon l'une des revendications 11 à 13, comprenant l'étalement du mélange sur une surface avant l'étape d'évaporation.

15. Procédé selon l'une des revendications 11 à 14, dans lequel le solvant est choisi parmi les éthers, les cétones, les solvants aromatiques, les alcools ou les esters, et de préférence est choisi parmi l'acétone et le tétrahydrofurane.

16. Procédé selon l'une des revendications 11 à 14, dans lequel la morphologie des films ou membranes obtenues est constituée d'un assemblage de particules discrètes ou coalescées.

17. Procédé selon l'une des revendications 11 à 14, dans lequel la morphologie de surface des films ou membranes obtenues est constituée d'une structure alvéolaire organisée en pseudo nid d'abeille.

## Patentansprüche

1. Poröses Material, das durch ein Blockcopolymer assemblierte Teilchen eines Polymers P umfasst, wobei das Blockcopolymer wenigstens einen aus einer mit dem Polymer P nicht mischbaren Sequenz gebildeten Block und wenigstens zwei aus mit dem Polymer P mischbaren Sequenzen gebildete Blöcke umfasst, wobei:
- es sich bei dem Blockcopolymer um ein Triblockcopolymer der allgemeinen Formel ABA handelt, wobei A für einen aus einer mit dem Polymer P mischbaren Polymersequenz gebildeten Block steht und B für einen aus einer mit dem Polymer P nicht mischbaren Polymersequenz gebildeten Block steht;
- es sich bei dem Block A und dem Block B um Acryl- oder Methacrylhomopolymer- oder -copolymersequenzen handelt;
- das Polymer P aus Polyvinylidenfluorid und Polyvinylchloriden ausgewählt ist.

2. Material nach Anspruch 1, wobei der Durchmesser Dv50 der Teilchen des Polymers P 30 bis 1000 nm, vorzugsweise 50 bis 400 nm und weiter bevorzugt 100 bis 200 nm beträgt.

3. Material nach Anspruch 1 oder 2, wobei es sich bei dem Block A um eine Homopolymer- oder Copolymersequenz handelt, die aus Polymethacrylsäureestern und Polyacrylsäureestern ausgewählt ist.

4. Material nach einem der Ansprüche 1 bis 3, wobei es sich bei dem Block A um einen Block aus Polymethylmethacrylat handelt und es sich bei dem Block B um einen Block aus Poly-2-(dimethylamino)ethylmethacrylat handelt.

5. Material nach einem der Ansprüche 1 bis 4, wobei es sich bei dem Polymer P um ein aus Vinylidenfluorid gebildetes Homopolymer oder Copolymer, vorzugsweise um ein Polyvinylidenfluorid-Homopolymer, handelt.

6. Material nach einem der Ansprüche 1 bis 5, das Folgendes aufweist:
- einen Massengehalt an Blockcopolymer im Bereich von 1 bis 60 %, vorzugsweise 10 bis 50 %, weiter bevorzugt 30 bis 50 %; und/oder
- einen Massengehalt an Polymer P im Bereich von 40 bis 99 %, vorzugsweise 50 bis 90 %, weiter bevorzugt 50 bis 70 %.

7. Material nach einem der Ansprüche 1 bis 6, wobei das Blockcopolymer Folgendes umfasst:
- einen Massengehalt an Blöcken, die aus mit dem Polymer P mischbaren Polymersequenzen gebildet sind, im Bereich von 10 bis 90 %, vorzugsweise 40 bis 80 %, weiter bevorzugt 60 bis 75 %; und/oder
- einen Massengehalt an Blöcken, die aus mit dem Polymer P nicht mischbaren Polymersequenzen gebildet sind, im Bereich von 10 bis 90 %, vorzugsweise 20 bis 60 %, weiter bevorzugt 25 bis 40 %.

8. Film, der wenigstens eine Schicht des Materials nach einem der Ansprüche 1 bis 7 umfasst.

9. Film nach Anspruch 8, bei dem es sich um eine Membran, vorzugsweise eine Filtrationsmembran, handelt.

10. Film nach Anspruch 8 oder 9, der einen auf einem Substrat abgeschiedenen Überzug bildet, wobei es sich bei dem Substrat vorzugsweise um eine Filtrationsmembran oder einen Träger aus Web- oder Vliesstoff handelt.

11. Verfahren zur Herstellung eines Materials nach einem der Ansprüche 1 bis 7 oder eines Films nach einem der Ansprüche 8 bis 10, das Folgendes umfasst:
- Bereitstellen einer Suspension von Teilchen des Polymers P;
- Bereitstellen des Blockcopolymers;
- Mischen der Teilchensuspension und des Blockcopolymers in Gegenwart eines Lösungsmittels;
- Trocknen dieser Mischung.

12. Verfahren nach Anspruch 11, wobei das Blockcopolymer in Lösung in dem Lösungsmittel bereitgestellt wird.

13. Verfahren zur Herstellung eines porösen Materials nach einem der Ansprüche 1 bis 7 oder eines Films nach einem der Ansprüche 8 bis 10, das Folgendes umfasst:
- Bereitstellen einer Lösung des Polymers P;
- Bereitstellen des Blockcopolymers;
- Fällen der Mischung aus Polymer P und Blockcopolymer in Wasser in Gegenwart eines Lösungsmittels, was zum Erhalt eines Latex führt;
- Abdampfen von Lösungsmittel und Nichtlösungsmittel von diesem Latex zum Erhalt des porösen Materials.

14. Verfahren nach einem der Ansprüche 11 bis 13, das vor dem Schritt des Abdampfens das Verteilen der Mischung auf einer Oberfläche umfasst.

15. Verfahren nach einem der Ansprüche 11 bis 14, wobei das Lösungsmittel aus Ethern, Ketonen, aromatischen Lösungsmitteln, Alkoholen oder Estern ausgewählt ist und vorzugsweise aus Aceton und Tetrahydrofuran ausgewählt ist.

16. Verfahren nach einem der Ansprüche 11 bis 14, wobei die Morphologie der erhaltenen Filme oder Membranen aus einer Anordnung von diskreten oder koaleszierten Teilchen gebildet wird.

17. Verfahren nach einem der Ansprüche 11 bis 14, wobei die Oberflächenmorphologie der erhaltenen Filme oder Membranen aus einer bienennestartig organisierten Wabenstruktur gebildet wird.

## Claims

1. A porous material comprising particles of polymer P assembled by a block copolymer, the block copolymer comprising at least one block consisting of a polymer sequence immiscible with the polymer P, and at least two blocks consisting of polymer sequences miscible with the polymer P, wherein:
- the block copolymer is a triblock copolymer of general formula ABA, in which A represents a block consisting of a polymer sequence miscible with the polymer P, and B represents a block consisting of a polymer sequence immiscible with the polymer P;
- the block A and the block B are acrylic or methacrylic homopolymer or copolymer sequences, and
- the polymer P is chosen from polyvinylidene fluoride and polyvinyl chlorides.

2. The material as claimed in claim 1, wherein the diameter Dv50 of the particles of polymer P is from 30 to 1000 nm, preferably from 50 to 400 nm and more particularly preferably from 100 to 200 nm.

3. The material as claimed in any of claims 1 or 2, wherein the block A is a homopolymer or copolymer block, chosen from methacrylic polyesters, acrylic polyesters.

4. The material as claimed in any of claims 1 to 3, wherein the block A is a poly(methyl methacrylate) block and the block B is a poly(2-(dimethylamino)ethyl methacrylate) block.

5. The material as claimed in one of claims 1 to 4, wherein the polymer P is a homopolymer or copolymer formed from vinylidene fluoride, preferably, a polyvinylidene fluoride homopolymer.

6. The material as claimed in one of claims 1 to 5, having:
- a weight content of block copolymer ranging from 1% to 60%, preferably from 10% to 50%, more particularly preferably from 30% to 50%; and/or
- a weight content of polymer P ranging from 40% to 99%, preferably from 50% to 90%, more particularly preferably from 50% to 70%.

7. The material as claimed in one of claims 1 to 6, wherein the block copolymer comprises:
- a weight content of blocks consisting of polymer sequences miscible with the polymer P ranging from 10% to 90%, preferably from 40% to 80%, more particularly preferably from 60% to 75%; and/or
- a weight content of blocks consisting of polymer sequences immiscible with the polymer P ranging from 10% to 90%, preferably from 20% to 60%, more particularly preferably from 25% to 40%.

8. A film comprising at least one layer of material as claimed in one of claims 1 to 7.

9. The film as claimed in claim 8, which is a membrane, preferably a filtration membrane.

10. The film as claimed in claim 8 or 9, which constitutes a coating deposited on a substrate, the substrate preferably being a filtration membrane or a support which is woven or nonwoven.

11. A process for producing a material as claimed in one of claims 1 to 7, or a film as claimed in one of claims 8 to 10, comprising:
- provision of a suspension of particles of polymer P;
- provision of the block copolymer;
- blending of the suspension of particles and of the block copolymer, in the presence of a solvent;
- drying of this blend.

12. The process as claimed in claim 11, wherein the block copolymer is provided in solution in the solvent.

13. A process for producing a porous material as claimed in one of claims 1 to 7, or a film as claimed in one of claims 8 to 10, comprising:
- provision of a solution of polymer P;
- provision of the block copolymer;
- precipitation of the blend of polymer P and of block copolymer in water, in the presence of a solvent, resulting in the obtaining of the latex;
- drying of this latex.

14. The process as claimed in one of claims 11 to 13, comprising spreading the blend over a surface before the drying step.

15. The process as claimed in one of claims 11 to 14, wherein the solvent is chosen from ethers, ketones, aromatic solvents, alcohols or esters, and preferably is chosen from acetone and tetrahydrofuran.

16. The process as claimed in one of claims 11 to 14, wherein the morphology of the films or membranes obtained consists of an assembly of discrete or coalesced particles.

17. The process as claimed in one of claims 11 to 14, wherein the surface morphology of the films or membranes obtained consists of a honeycomb structure organized as a bees nest-like structure.
